# EUROPEAN PATENT APPLICATION

(11) **EP 4 145 306 A1**
(43) Date of publication of application: **08.03.2023**
(21) Application number: 22198739.9
(22) Date of filing: 29.09.2022
(51) Int. Cl.: G06F 16/901, G06F 16/71, G06F 16/783

(54) **METHOD AND APPARATUS OF PROCESSING DATA, ELECTRONIC DEVICE, AND MEDIUM**

(30) Priority: 29.09.2021 CN 202111157005
(71) Applicant: Beijing Baidu Netcom Science Technology Co., Ltd., Beijing 100085 (CN)
(72) Inventor: Jiang, Wenbin, Beijing, 100085 (CN); Lv, Yajuan, Beijing, 100085 (CN); Zhu, Yong, Beijing, 100085 (CN); Wu, Hua, Beijing, 100085 (CN); Wang, Haifeng, Beijing, 100085 (CN)
(74) Representative: Hoffmann Eitle

(57) **Abstract**

The present disclosure provides a method and an apparatus of processing data, a device, a medium, and a product, which relate to a field of an artificial intelligence technology, in particular to fields of computer vision, natural language technology, speech technology, deep learning and knowledge graph. The method of processing data includes: generating a video feature, a question feature and an answer feature based on acquired video data, acquired question data and acquired candidate answer data; determining a link relationship between the video feature, the question feature and the answer feature; and determining a matching result for the video data, the question data and the candidate answer data based on the link relationship.

## Description

### TECHNICAL FIELD

The present disclosure relates to a field of an artificial intelligence technology, in particular to fields of computer vision, natural language technology, speech technology, deep learning and knowledge graph, and more specifically, to a method and an apparatus of processing data, an electronic device, a medium, and a program product.

### BACKGROUND

Video is an information-carrying form widely used on the Internet. As a way of acquiring information, a question and answer method may be implemented to give an answer according to a user's question. A video question and answer method is widely used as an efficient question and answer method. Through the video question and answer method, a video for a question raised by a user may be provided according to the question, and the provided video is used to answer the question raised by the user.

### SUMMARY

The present disclosure provides a method and an apparatus of processing data, an electronic device, a storage medium, and a program product.

According to an aspect of the present disclosure, a method of processing data is provided, including: generating a video feature, a question feature and an answer feature based on acquired video data, acquired question data and acquired candidate answer data; determining a link relationship between the video feature, the question feature and the answer feature; and determining a matching result for the video data, the question data and the candidate answer data based on the link relationship.

According to another aspect of the present disclosure, an apparatus of processing data is provided, including: a first acquisition module configured to generate a video feature, a question feature and an answer feature based on acquired video data, acquired question data and acquired candidate answer data; a determination module configured to determine a link relationship between the video feature, the question feature and the answer feature; and a second acquisition module configured to determine a matching result for the video data, the question data and the candidate answer data based on the link relationship.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of processing data described above.

According to another aspect of the present disclosure, a non-transitory computer-readable storage medium having computer instructions therein is provided, and the computer instructions are configured to cause a computer to implement the method of processing data described above.

According to another aspect of the present disclosure, a computer program product containing a computer program is provided, and the computer program, when executed by a processor, causes the processor to implement the method of processing data described above.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure.
FIG. 1 schematically shows an application scenario of a method and an apparatus of processing data according to embodiments of the present disclosure.
FIG. 2 schematically shows a flowchart of a method of processing data according to embodiments of the present disclosure.
FIG. 3 schematically shows a schematic diagram of a method of processing data according to embodiments of the present disclosure.
FIG. 4 schematically shows a schematic diagram of a link relationship according to embodiments of the present disclosure.
FIG. 5 schematically shows a block diagram of an apparatus of processing data according to embodiments of the present disclosure.
FIG. 6 shows a block diagram of an electronic device for implementing the data processing of embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The terms used herein are for the purpose of describing specific embodiments only and are not intended to limit the present disclosure. The terms "comprising", "including", "containing", etc. used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In a case of using the expression similar to "at least one of A, B and C", it should be explained according to the meaning of the expression generally understood by those skilled in the art (for example, "a system including at least one of A, B and C" should include but not be limited to a system including only A, a system including only B, a system including only C, a system including A and B, a system including A and C, a system including B and C, and/or a system including A, B and C).

Embodiments of the present disclosure provide a method of processing data, including: generating a video feature, a question feature and an answer feature based on acquired video data, acquired question data and acquired candidate answer data; determining a link relationship between the video feature, the question feature and the answer feature; and determining a matching result of the video data, the question data and the candidate answer data based on the link relationship.

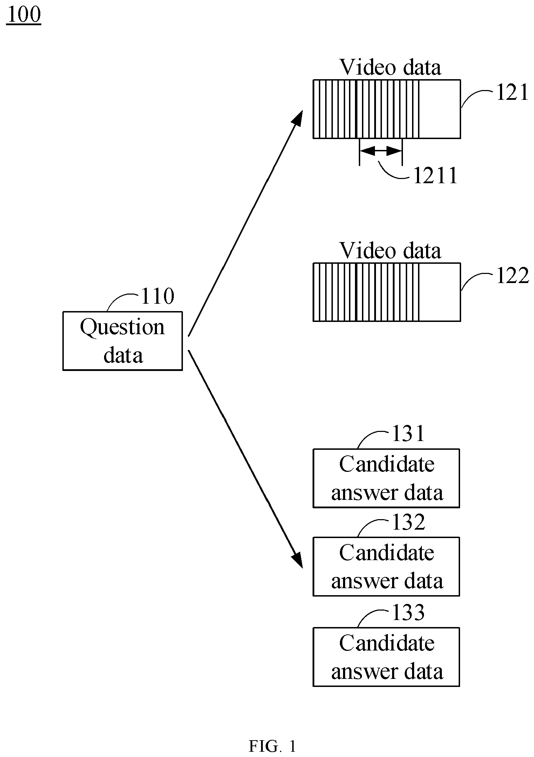

FIG. 1 schematically shows an application scenario of a method and an apparatus of processing data according to embodiments of the present disclosure. It should be noted that FIG. 1 is only an example of the application scenario in which embodiments of the present disclosure may be applied to help those skilled in the art understand the technical content of the present disclosure, but it does not mean that embodiments of the present disclosure may not be used for other devices, systems, environments or scenarios.

As shown in FIG. 1, an application scenario 100 of the present disclosure includes, for example, matching corresponding answer data for question data 110, and the answer data may be used to answer a question corresponding to the question data 110.

For example, the answer data may include video data and candidate answer data. For example, video data 121 corresponding to the question data 110 may be determined from video data 121 and 122 that may contain an information for answering the question corresponding to the question data 110. In another example, a video segment 1211 that may be used to answer the question may be determined from the video data 121.

For example, for candidate answer data 131, 132 and 133, each candidate answer data may be, for example, an option. Embodiments of the present disclosure may be implemented to select the candidate answer data 132 matching the question data 110 from the candidate answer data 131, 132 and 133 based on a matching between the question data 110 and each candidate answer data.

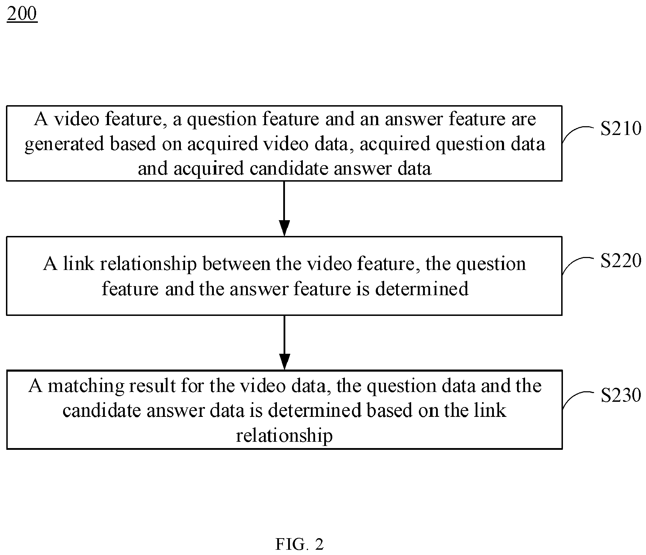

In a related art, when matching a corresponding answer to a question, the matched answer is not accurate and comprehensive. In view of this, embodiments of the present disclosure provide a method of processing data. The method of processing data according to exemplary embodiments of the present disclosure will be described below with reference to FIG. 2 to FIG. 4 in combination with the application scenario of FIG. 1.

FIG. 2 schematically shows a flowchart of a method of processing data according to embodiments of the present disclosure.

As shown in FIG. 2, a method 200 of processing data according to embodiments of the present disclosure may include, for example, operations S210 to S230.

In operation S210, a video feature, a question feature and an answer feature are generated based on acquired video data, acquired question data and acquired candidate answer data.

In operation S220, a link relationship between the video feature, the question feature and the answer feature is determined.

In operation S230, a matching result of the video data, the question data and the candidate answer data is determined based on the link relationship.

For example, corresponding answer data may be matched to the question data, and the answer data may include, for example, video data and candidate answer data. For the question corresponding to the question data, the video data contains a video segment for answering the question. The candidate answer data may be used to answer the question, and the candidate answer data may include, for example, an option.

By processing the video data, the question data and the candidate answer data respectively, features of the three may be obtained, including a video feature, a question feature and an answer feature. Then, the matching result of the video data, the question data and the candidate answer data may be obtained based on the link relationship between the video feature, the question feature and the answer feature.

For example, a logical reasoning may be performed using the link relationship to obtain a deeper relation between the video feature, the question feature and the answer feature, so that the matching result obtained based on the video feature, the question feature and the answer feature may reflect a matching between the video feature, the question feature and the answer feature at a deeper level, so as to improve an accuracy of the matching result.

For example, the matching result may indicate, for example, a matching between the video data and the question data, and a matching between the candidate answer data and the question data.

According to embodiments of the present disclosure, by determining the link relationship between the video feature, the question feature and the answer feature, and determining the matching result for the video data, the question data and the candidate answer data based on the link relationship, the video data matching the question data and the candidate answer data matching the question data may be simultaneously determined, so that a diversity of the matching result and an efficiency of obtaining the matching result may be improved. In addition, the matching result determined based on the link relationship may reflect an internal relation between the video feature, the question feature and the answer feature at a deeper level, so that an accuracy of the matching result may be improved.

According to embodiments of the present disclosure, the link relationship may include, for example, graph data constructed based on a knowledge graph technology. The graph data may include, for example, a plurality of nodes and edges between nodes. The video feature, the question feature and the answer feature may be used as nodes of the graph data, and a connection between features may be used as an edge between nodes.

Then, reasoning may be performed using the graph data to obtain the matching result for the video data, the question data and the candidate answer data. For example, the graph data may be input into a graph network model for the reasoning, and the graph network model may deeply understand an inherent information of the graph data, so as to obtain the matching result. The graph network model may include, for example, a graph neural network model.

In an example, the matching result may include, for example, whether the question data and the video data are matched. That is, whether the video data contains an information for answering the question corresponding to the question data.

In another example, the matching result may include, for example, whether the question data and the candidate answer data are matched. That is, whether the candidate answer data may be used to answer the question corresponding to the question data.

In another example, the matching result may include, for example, a video segment for the question data in the video data. That is, when the video data and the question data are matched, a video segment for answering the question corresponding to the question data may be determined from the video data.

According to embodiments of the present disclosure, the video data may be processed based on first knowledge data to obtain the video feature, the question data may be processed based on second knowledge data to obtain the question feature, and the candidate answer data may be processed based on third knowledge data to obtain the answer feature.

For example, the first knowledge data, the second knowledge data, and the third knowledge data may be the same or different. For example, the first knowledge data is associated with the video data, the second knowledge data is associated with the question data, and the third knowledge data is associated with the candidate answer data. Any one of the first knowledge data, the second knowledge data and the third knowledge data may include, for example, external data stored in an external database.

For example, the external data may include but not be limited to common sense data, experience data, co-occurrence data, and the like. The common sense data may be stored, for example, in a common sense database, the experience data may be stored, for example, in an experience database, and the co-occurrence data may be stored, for example, in a co-occurrence database. Taking the question data as an example, the common sense data may contain a common sense information for answering the question, the experience data may contain an experience information for answering the question, and the co-occurrence data may contain data that occurs frequently in association with the question data and therefore may contain, to a certain extent, a relevant information for answering the question. For ease of understanding, the common sense data is taken as example below in describing the technical solutions of embodiments of the present disclosure.

It may be understood that, as the video feature, the question feature and the answer feature are obtained in combination with the knowledge data, the obtained video feature, question feature and answer feature are associated with each other through the common sense data, so that the accuracy of the matching based on the video feature, the question feature and the answer feature may be improved.

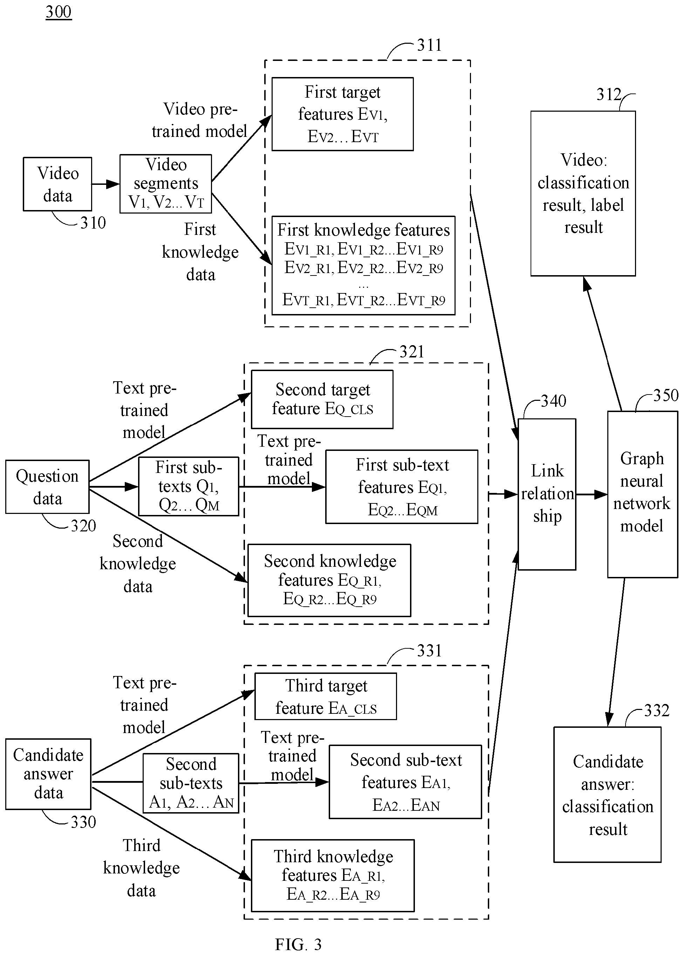

With reference to FIG. 3, it is described below how to obtain the video feature, the question feature and the answer feature based on the first knowledge data, the second knowledge data and the third knowledge data.

FIG. 3 schematically shows a schematic diagram of the method of processing data according to embodiments of the present disclosure.

As shown in FIG. 3, embodiments of the present disclosure include video data 310, question data 320, and candidate answer data 330.

Firstly, it is describe how to obtain the video feature based on the first knowledge data.

For the video data 310, a plurality of video segment data are extracted from the video data 310. For example, T video segment data V₁, V₂, ..., V_{T} may be extracted, where T is an integer greater than or equal to 1. For example, key frames in the video data 310 may be identified, video segment data is extracted around each key frame, and the extracted video segment data may contain the key frame. The key frame may include, for example, a video frame corresponding to a scene switching in the video data 310.

Taking the video segment data V₁ among the plurality of video segment data V₁, V₂, ..., V_{T} as an example, a feature extraction may be performed on the video segment data V₁ to obtain a first target feature E_{V1}. For example, the feature extraction may be performed on the video segment data V₁ through a video pre-trained model to obtain the first target feature E_{V1}. Similarly, the first target features E_{V2}, ..., E_{VT} of the other video segment data may be obtained. Then, the first target features E_{V1}, E_{V2}, ..., E_{VT} corresponding to the video segment data V₁, V₂,..., V_{T} are obtained respectively.

Taking the video segment data V₁ as an example, a first knowledge feature for the video segment data V₁ may be generated based on the first knowledge data. A plurality of first knowledge features may be acquired for the video segment data V₁. In embodiments of the present disclosure, nine first knowledge features are illustrated by way of example. That is, the first knowledge features for the video segment data V₁ may include E_{V1_R1}, E_{V1_R2}, ..., E_{V1_R9}. Similarly, the first knowledge features E_{V2_R1}, E_{V2_R2}, ..., E_{V2_R9} for the video segment data V₂ may be obtained, and the first knowledge features E_{VT_R1}, E_{VT_R2}, ..., E_{VT_R9} for the video segment data V_{T} may be obtained

Then, the first target features E_{V1}, E_{V2}, ..., E_{VT} and the first knowledge features for each video segment data are determined as a video feature 311 for the video data 310.

For example, for each video segment data, generating the first knowledge feature for the video segment data based on the first knowledge data may include the following process.

Firstly, subtitle data in the video segment data may be acquired through Optical Character Recognition (OCR) technology, a speech recognition may be performed on the video segment data through a speech recognition technology to obtain speech data, and an image recognition may be performed on the video segment data through an image recognition technology to obtain image data. The image data may include, for example, data of object in the video, and the object may be, for example, objects or humans.

Then, a text to be processed may be determined based on the subtitle data, the voice data, and the image data. Next, target first knowledge data matching the text to be processed is determined from the first knowledge data, and a feature extraction is performed on the target first knowledge data to obtain the first knowledge feature.

Taking the video segment data V₁ as an example, the subtitle data may contain, for example, "I want to drink water now", the speech data may contain, for example, "drink water", and the image data may contain an object (water bottle or water). The text to be processed obtained based on the subtitle data, the speech data and the image data may be, for example, "I want to drink water".

For example, the first knowledge data containing common sense data associated with the video data 310 may be taken as an example. When the video segment data V₁ contains an information related to drinking water, the first knowledge data may contain, for example, a common sense related to drinking water, which may include, for example, "you may drink water when you are thirsty", "you may buy water when you want to drink water", "you may drink water when you are tired", "you may drink water after work", "you may drink water when you are sick", and so on.

The text to be processed "I want to drink water" may be input into a common sense knowledge database in which the first knowledge data is stored, to match nine target first knowledge data having a semantic relationship with the text to be processed. The target first knowledge data may include, for example, "you may drink water when you are thirsty", "you may buy water when you want to drink water", "you may drink water when you are tired", "you may drink water after work", and so on. Then, a feature extraction may be performed on the nine target first knowledge data respectively to obtain the first knowledge features E_{V1_R1}, E_{V1_R2}, ..., E_{V1_R9} for the video segment data V₁. Similarly, the first knowledge features for the other video segment data may be obtained.

It may be understood that for the video data, the video feature may be obtained in various ways to enrich the obtained video feature, so as to improve the matching accuracy of the video data, the question data and the candidate answer data.

Then, it is described how to obtain the question feature based on the second knowledge data.

For the question data 320, a feature extraction may be performed on the question data 320 through a text pre-trained model to obtain a second target feature E_{Q_CLS}.

The question data 320 may be tokenized through a tokenization technology to obtain a plurality of first sub-texts Q₁, Q₂, ..., Q_{M} for the question data 320, where M is an integer greater than or equal to 1, and the first sub-text may be, for example, a word. Then, a feature extraction may be performed on each first sub-text through the text pre-trained model to obtain a first sub-text feature of each first sub-text. Then, a plurality of first sub-text features E_{Q1}, E_{Q2}, ..., E_{QM} corresponding to the plurality of first sub-texts Q₁, Q₂, ..., Q_{M} may be obtained.

Next, target second knowledge data matching the question data 320 may be determined from the second knowledge data. Then, a feature extraction may be performed on the target second knowledge data to obtain the second knowledge feature. Next, the second target feature, the first sub-text feature and the second knowledge feature are determined as a question feature 321 for the question data 320.

For the second knowledge feature, the question data 320 of "what to do if I am thirsty" and the second knowledge data containing the common sense data associated with the question data 320 are taken as examples. For example, the second knowledge data may contain a common sense related to thirst, such as "what to do if I am thirsty after exercise", "what to drink when I am thirsty", "may I drink a lot of beverage when I am thirsty", and so on.

The "what to do if I am thirsty" may be input into a common sense knowledge database in which the second knowledge data is stored, to match nine target second knowledge data having a semantic relationship with the question data 320. The target second knowledge data may include, for example, "what to do if I am thirsty after exercise", "what to drink when I am thirsty", and so on. Then, a feature extraction may be performed on the nine target second knowledge data to obtain the second knowledge features E_{Q_R1}, E_{Q_R2}, ..., E_{Q_R9}.

It may be understood that for the question data, the question feature may be obtained in a variety of ways to enrich the obtained question feature, so as to improve the matching accuracy of the video data, the question data and the candidate answer data.

Next, it is described how to obtain the answer feature based on the third knowledge data.

For the candidate answer data 330, a feature extraction may be performed on the candidate answer data 330 through a text pre-trained model to obtain a third target feature E_{A_CLS}.

The candidate answer data 330 may be tokenized through a tokenization technology to obtain a plurality of second sub-texts A₁, A₂, ..., A_{N} for the candidate answer data 330, where N is an integer greater than or equal to 1, and the second sub-text may be, for example, a word. Then, a feature extraction may be performed on each second sub-text through the text pre-trained model to obtain a second sub-text feature of each second sub-text. Then, a plurality of second sub-text features E_{A1}, E_{A2}, ..., E_{AN} corresponding to the plurality of second sub-texts A₁, A₂, ..., A_{N} may be obtained.

Next, target third knowledge data matching the candidate answer data 330 is determined from the third knowledge data. Then, a feature extraction may be performed on the target third knowledge data to obtain a third knowledge feature. Next, the third target feature, the second sub-text feature and the third knowledge feature are determined as an answer feature 331 for the candidate answer data 330.

For the third knowledge feature, the candidate answer data 330 of "you may drink water if you are thirsty" and the third knowledge data containing the common sense data associated with the candidate answer data 330 may be taken as examples. For example, the third knowledge data may contain a common sense related to how to drink water, which may include, for example, "you may drink boiled water", "you may drink beverage", "you may drink a small amount of water each time but many times when you are thirsty", and so on.

The "you may drink water if you are thirsty" may be input into a common sense knowledge database in which the third knowledge data is stored, to match nine target third knowledge data having a semantic relationship with the candidate answer data 330. The target third knowledge data may include, for example, "you may drink boiled water", "you may drink beverage", and so on. Then, a feature extraction may be performed on the nine target third knowledge data to obtain the third knowledge features E_{A_R1}, E_{A_R2}, ..., E_{A_R9}.

It may be understood that for the candidate answer data, the answer feature may be obtained in a variety of ways to enrich the obtained answer feature, so as to improve the matching accuracy of the video data, the question data and the candidate answer data.

Next, it is described how to obtain a matching result based on the video feature 311, the question feature 321 and the answer feature 331.

After the video feature 311, the question feature 321 and the answer feature 331 are obtained, a link relationship 340 between the video feature 311, the question feature 321 and the answer feature 331 may be built using a knowledge graph technology based on a rule such as experience and word co-occurrence. The link relationship 340 may include, for example, graph data, and the graph data may include, for example, knowledge expansion information graph data. The link relationship 340 may be input into a graph neural network model 350 and processed to reason and learn a deeper internal relation of the link relationship 340, so as to output a matching result 312 for the video data 310 and a matching result 332 for the candidate answer data 330.

For example, the matching result 312 includes a classification result and a label result. The classification result indicates whether the video data 310 and the question data 320 are matched. When the video data 310 and the question data 320 are matched, the label result may contain a label information for the target video segment for answering the question corresponding to the question data 320.

When training the graph neural network model 350, the video data 310 and the question data 320 as training samples may or may not be matched. Therefore, an output result obtained by training the graph neural network model 350 may include that the video data 310 and the question data 320 are matched and that the video data 310 and the question data 320 are not matched. When using the graph neural network model 350, the input video data 310 and the input question data 320 may be matched. Therefore, an output of the graph neural network model 350 may only include the label result without the classification result. Certainly, the classification result may also be output, and all the classification results may be, for example, "match".

For example, the matching result 332 may include a classification result, which may indicate whether the candidate answer data 330 and the question data 320 are matched.

For example, one link relationship 340 may be obtained based on one video data 310, one question data 320, and one candidate answer data 330. In a case of one video data 310, one question data 320 and five candidate answer data 330, a first link relationship 340 may be obtained based on the video data 310, the question data 320 and a first candidate answer data 330, a second link relationship 340 may be obtained based on the video data 310, the question data 320 and a second candidate answer data 330, and so on, so that five link relationships 340 may be obtained. The five link relationships 340 may be respectively processed using the graph neural network model 350 to obtain five matching results, based on which it may be determined whether each candidate answer data 330 matches the question data 320.

In embodiments of the present disclosure, the link relationship is obtained by processing the video data, the question data and the candidate answer data using the knowledge data, so that a link relationship with a strong information interaction may be obtained by a data expansion using the knowledge data. In addition, a multi-level data understanding and reasoning is performed using the link relationship to comprehensively understand the video data, the question data and the candidate answer data, so that a question and answer decision may be made better, and a better question and answer effect may be achieved.

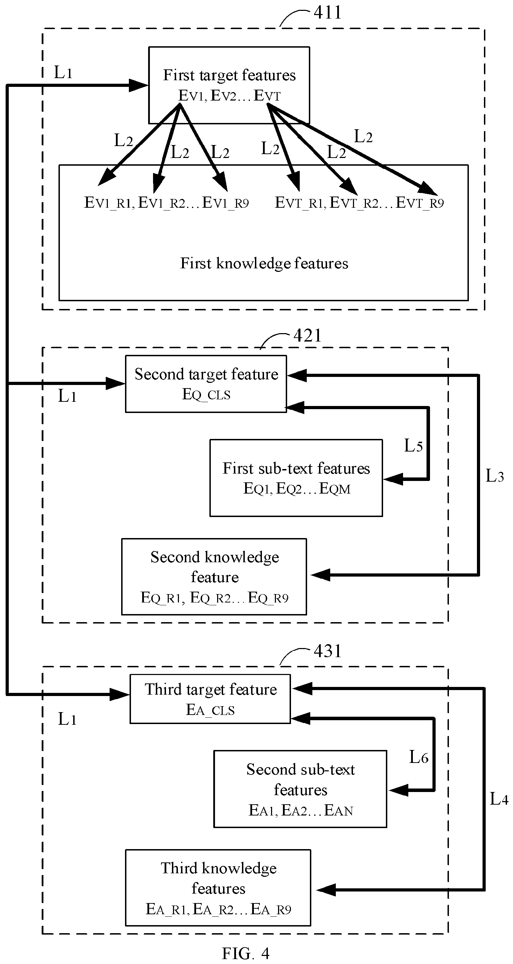

FIG. 4 schematically shows a schematic diagram of a link relationship according to embodiments of the present disclosure.

As shown in FIG. 4, for a video feature 411, a question feature 421 and an answer feature 431, the link relationship may include, for example, link relationships L₁ to L6.

For example, the link relationship between the plurality of first target features E_{V1}, E_{V2}, ..., E_{VT} corresponding to the plurality of video segment data respectively, the second target feature E_{Q_CLS} and the third target feature E_{A_CLS} may be represented by L₁. For example, E_{V1}, E_{V2}, ..., E_{VT}, E_{Q_CLS} and E_{A_CLS} are fully connected, that is, any two vectors (nodes) in E_{V1}, E_{V2}, ..., E_{VT}, E_{Q_CLS} and E_{A_CLS} are connected to each other.

For example, for each video segment data, the link relationship between the first target feature and the first knowledge feature may be represented by L₂. For example, for the video segment data V₁, the first target feature E_{V1} may be connected to the first knowledge features E_{V1_R1}, E_{V1_R2}, ..., E_{V1_R9}. For the video segment data V_{T}, the first target feature E_{VT} may be connected to the first knowledge features E_{VT_R1}, E_{VT_R2}, ..., E_{VT_R9}.

For example, the link relationship between the second target feature E_{Q_CLS} and the second knowledge features E_{Q_R1}, E_{Q_R2}, ..., E_{Q_R9} may be represented by L₃. For example, E_{Q_CLS} may be connected to E_{Q_R1}, E_{Q_CLS} may be connected to E_{Q_R2}, ..., E_{Q_CLS} may be connected to E_{Q_R9}.

For example, the link relationship between the third target feature E_{A_CLS} and the third knowledge features E_{A_R1}, E_{A_R2}, ..., E_{A_R9} may be represented by L₄. For example, E_{A_CLS} may be connected to E_{A_R1}, E_{A_CLS} may be connected to E_{A_R2}, ..., E_{A_CLS} may be connected to E_{A_R9}.

For example, the link relationship between the second target feature E_{Q_CLS} and the first sub-text features E_{Q1}, E_{Q2}, ..., E_{QM} may be represented by L₅. For example, E_{Q_CLS}, E_{Q1}, E_{Q2}, ..., E_{QM} are fully connected, that is, any two vectors (nodes) in E_{Q_CLS}, E_{Q1}, E_{Q2}, ..., E_{QM} are connected to each other.

For example, the link relationship between the third target feature E_{A_CLS} and the second sub-text features E_{A1}, E_{A2}, ..., E_{AN} may be represented by L₆. For example, E_{A_CLS}, E_{A1}, E_{A2}, ..., E_{AN} are fully connected, that is, any two vectors (nodes) in E_{A_CLS}, E_{A1}, E_{A2}, ..., E_{AN} are connected to each other.

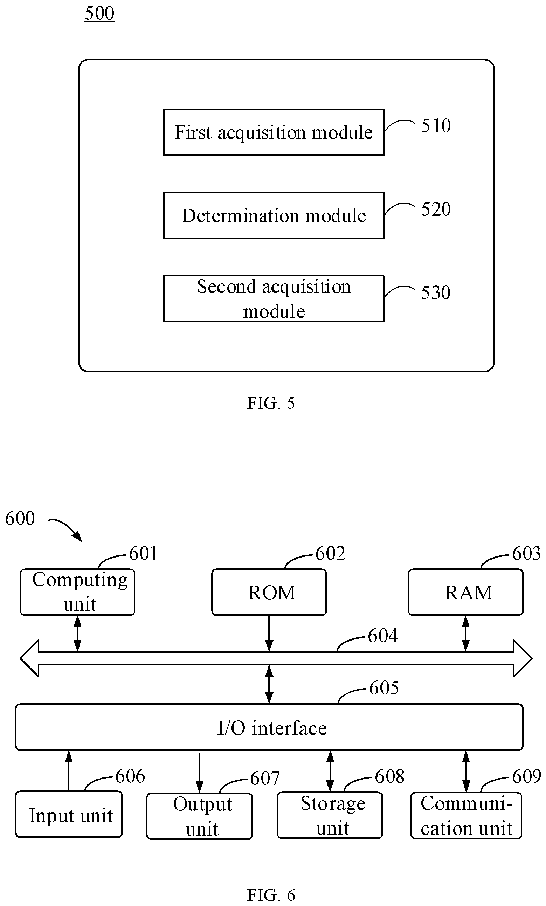

FIG. 5 schematically shows a block diagram of an apparatus of processing data according to embodiments of the present disclosure.

As shown in FIG. 5, an apparatus 500 of processing data according to embodiments of the present disclosure includes, for example, a first acquisition module 510, a determination module 520, and a second acquisition module 530.

The first acquisition module 510 may be used to generate a video feature, a question feature and a candidate answer feature based on acquired video data, acquired question data and acquired candidate answer data. According to embodiments of the present disclosure, the first acquisition module 510 may perform, for example, the operation S210 described above with reference to FIG. 2, and details will not be described here.

The determination module 520 may be used to determine a link relationship between the video feature, the question feature and the answer feature. According to embodiments of the present disclosure, the determination module 520 may perform, for example, the operation S220 described above with reference to FIG. 2, and details will not be described here.

The second acquisition module 530 may be used to determine a matching result for the video data, the question data and the candidate answer data based on the link relationship. According to embodiments of the present disclosure, the second acquisition module 530 may perform, for example, the operation S230 described above with reference to FIG. 2, and details will not be described here.

According to embodiments of the present disclosure, the first acquisition module 510 may include a first processing sub-module, a second processing sub-module, and a third processing sub-module. The first processing sub-module is used to process the video data based on first knowledge data associated with the video data, so as to obtain the video feature. The second processing sub-module is used to process the question data based on second knowledge data associated with the question data, so as to obtain the question feature. The third processing sub-module is used to process the candidate answer data based on third knowledge data associated with the candidate answer data, so as to obtain the answer feature.

According to embodiments of the present disclosure, the first processing sub-module may include a first extraction unit, a second extraction unit, a first acquisition unit, and a first determination unit. The first extraction unit is used to extract a plurality of video segment data from the video data. For each video segment data among the plurality of video segment data, the second extraction unit is used to perform a feature extraction on the video segment data to obtain a first target feature, the first acquisition unit is used to generate a first knowledge feature for the video segment data based on the first knowledge data, and the first determination unit is used to determine the first target feature and the first knowledge feature as the video feature.

According to embodiments of the present disclosure, the first acquisition unit may include an acquisition sub-unit, a speech recognition sub-unit, an image recognition sub-unit, a first determination sub-unit, a second determination sub-unit, and an extraction sub-unit. The acquisition sub-unit is used to acquire subtitle data in the video segment data. The speech recognition sub-unit is used to perform a speech recognition on the video segment data to obtain speech data. The image recognition sub-unit is used to perform an image recognition on the video segment data to obtain image data. The first determination sub-unit is used to determine a text to be processed based on the subtitle data, the speech data and the image data. The second determination sub-unit is used to determine target first knowledge data matching the text to be processed from the first knowledge data. The extraction sub-unit is used to perform a feature extraction on the target first knowledge data to obtain the first knowledge feature.

According to embodiments of the present disclosure, the second processing sub-module may include a third extraction unit, a second acquisition unit, a second determination unit, a fourth extraction unit, and a third determination unit. The third extraction unit is used to perform a feature extraction on the question data to obtain a second target feature. The second acquisition unit is used to acquire a first sub-text feature of each first sub-text among a plurality of first sub-texts in the question data. The second determination unit is used to determine target second knowledge data matching the question data from the second knowledge data. The fourth extraction unit is used to perform a feature extraction on the target second knowledge data to obtain a second knowledge feature. The third determination unit is used to determine the second target feature, the first sub-text feature and the second knowledge feature as the question feature.

According to embodiments of the present disclosure, the third processing sub-module may include a fifth extraction unit, a third acquisition unit, a fourth determination unit, a sixth extraction unit, and a fifth determination unit. The fifth extraction unit is used to perform a feature extraction on the candidate answer data to obtain a third target feature. The third acquisition unit is used to acquire a second sub-text feature of each second sub-text among a plurality of second sub-texts in the candidate answer data. The fourth determination unit is used to determine target third knowledge data matching the candidate answer data from the third knowledge data. The sixth extraction unit is used to perform a feature extraction on the target third knowledge data to obtain a third knowledge feature. The fifth determination unit is used to determine the third target feature, the second sub-text feature and the third knowledge feature as the answer feature.

According to embodiments of the present disclosure, the link relationship may include at least one selected from: a link relationship between the plurality of first target features corresponding to the plurality of video segment data respectively, the second target feature, and the third target feature; a link relationship between the first target feature and the first knowledge feature for each video segment data; a link relationship between the second target feature and the second knowledge feature; a link relationship between the third target feature and the third knowledge feature; a link relationship between the second target feature and the first sub-text feature; or a link relationship between the third target feature and the second sub-text feature.

According to embodiments of the present disclosure, the matching result may include at least one selected from: a matching result for the question data and the video data; a matching result for the question data and the candidate answer data; or a video segment for the question data in the video data.

According to embodiments of the present disclosure, the link relationship may include graph data, and the second acquisition module 530 is further used to reason using the graph data to obtain a matching result for the video data, the question data and the candidate answer data.

In the technical solution of the present disclosure, an acquisition, a storage, an application, a processing, a transmission, a provision, a disclosure and an application of user personal information involved comply with provisions of relevant laws and regulations, take essential confidentiality measures, and do not violate public order and good custom.

In the technical solution of the present disclosure, authorization or consent is obtained from the user before the user's personal information is obtained or collected.

According to embodiments of the present disclosure, the present disclosure further provides an electronic device, a readable storage medium, and a computer program product.

FIG. 6 shows a block diagram of an electronic device for implementing the method of processing data of embodiments of the present disclosure.

FIG. 6 shows a schematic block diagram of an exemplary electronic device 600 for implementing embodiments of the present disclosure. The electronic device 600 is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and processes described above, such as the method of processing data. For example, in some embodiments, the method of processing data may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the method of processing data described above. Alternatively, in other embodiments, the computing unit 601 may be configured to perform the method of processing data by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, or a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of processing data, comprising:
generating (S210) a video feature (311), a question feature (321) and an answer feature (331) based on acquired video data (121, 122, 310), acquired question data (110, 320) and acquired candidate answer data (131, 132, 133, 330);
determining (S220) a link relationship (340) between the video feature (311), the question feature (321) and the answer feature (331); and
determining (S230) a matching result for the video data (121, 122, 310), the question data (110, 320) and the candidate answer data (131, 132, 133, 330) based on the link relationship (340).

2. The method according to claim 1, wherein the generating a video feature (311), a question feature (321) and an answer feature (331) based on acquired video data (121, 122, 310), acquired question data (110, 320) and acquired candidate answer data (131, 132, 133, 330) comprises:
processing the video data (121, 122, 310) based on first knowledge data to obtain the video feature (311), wherein the first knowledge data is associated with the video data (121, 122, 310);
processing the question data (110, 320) based on second knowledge data to obtain the question feature (321), wherein the second knowledge data is associated with the question data (110, 320); and
processing the candidate answer data (131, 132, 133, 330) based on third knowledge data to obtain the answer feature (331), wherein the third knowledge data is associated with the candidate answer data (131, 132, 133, 330).

3. The method according to claim 2, wherein the processing the video data (121, 122, 310) based on first knowledge data to obtain the video feature (311) comprises:
extracting a plurality of video segment data (V₁-V_{T}) from the video data (121, 122, 310); and
for each video segment data (V₁-V_{T}) among the plurality of video segment data (V₁-V_{T}):
performing a feature extraction on the video segment data (V₁-V_{T}) to obtain a first target feature (E_{V1}-E_{VT});
acquiring a first knowledge feature (E_{V1_RL}-E_{VT_R9}) for the video segment data (V₁-V_{T}) based on the first knowledge data; and
determining the first target feature (E_{V1}-E_{VT}) and the first knowledge feature (E_{V1_R1}-E_{VT_R9}) as the video feature (311).

4. The method according to claim 3, wherein the acquiring a first knowledge feature (E_{V1_R1}-E_{VT_R9}) for the video segment data (V₁-V_{T}) based on the first knowledge data comprises:
acquiring subtitle data in the video segment data (V₁-V_{T});
performing a speech recognition on the video segment data (V₁-V_{T}) to obtain speech data;
performing an image recognition on the video segment data (V₁-V_{T}) to obtain image data;
determining a text to be processed based on the subtitle data, the speech data and the image data;
determining target first knowledge data matching the text to be processed from the first knowledge data; and
performing a feature extraction on the target first knowledge data to obtain the first knowledge feature (E_{V1_R1}-E_{VT_R9}).

5. The method according to any one of claims 2 to 4, wherein the processing the question data (110, 320) based on second knowledge data to obtain the question feature (321) comprises:
performing a feature extraction on the question data (110, 320) to obtain a second target feature (E_{Q_CLS});
acquiring a first sub-text feature (E_{Q1}-E_{QM}) of each first sub-text (Q₁-Q_{M}) among a plurality of first sub-texts (Q₁-Q_{M}) in the question data (110, 320);
determining target second knowledge data matching the question data (110, 320) from the second knowledge data;
performing a feature extraction on the target second knowledge data to obtain a second knowledge feature (E_{Q_R1}-E_{Q_R9}); and
determining the second target feature (E_{Q_CLS}), the first sub-text feature (E_{Q1}-E_{QM}) and the second knowledge feature (E_{Q_R1}-E_{Q_R9}) as the question feature (321).

6. The method according to any one of claims 2 to 5, wherein the processing the candidate answer data (131, 132, 133, 330) based on third knowledge data to obtain the answer feature (331) comprises:
performing a feature extraction on the candidate answer data (131, 132, 133, 330) to obtain a third target feature (E_{A_CLS});
acquiring a second sub-text feature (E_{A1}-E_{AN}) of each second sub-text (A₁-A_{N}) among a plurality of second sub-texts (A₁-A_{N}) in the candidate answer data (131, 132, 133, 330);
determining target third knowledge data matching the candidate answer data (131, 132, 133, 330) from the third knowledge data;
performing a feature extraction on the target third knowledge data to obtain a third knowledge feature (E_{A_R1}-E_{A_R9}); and
determining the third target feature (E_{A_CLS}), the second sub-text feature (E_{A1}-E_{AN}) and the third knowledge feature (E_{A_R1}-E_{A_R9}) as the answer feature (331).

7. The method according to any one of claims 1 to 6, wherein the link relationship (340) comprises at least one selected from:
a link relationship (L₁) between a plurality of first target features (E_{V1}-E_{VT}) corresponding to the plurality of video segment data (V₁-V_{T}) respectively, the second target feature (E_{Q_CLS}), and the third target feature (E_{A_CLS});
a link relationship (L₂) between the first target feature (E_{V1}-E_{VT}) and the first knowledge feature (E_{V1_RL}-E_{VT_R9}) for each of the video segment data (V₁-V_{T});
a link relationship (L₃) between the second target feature (E_{Q_CLS}) and the second knowledge feature (E_{Q_R1}-E_{Q_R9});
a link relationship (L₄) between the third target feature (E_{A_CLS}) and the third knowledge feature (E_{A_R1}-E_{A_R9});
a link relationship (L₅) between the second target feature (E_{Q_CLS}) and the first sub-text feature (E_{Q1}-E_{QM}); or
a link relationship (L₆) between the third target feature (E_{A_CLS}) and the second sub-text feature (E_{A1}-E_{AN}).

8. The method according to any one of claims 1 to 7, wherein the matching result comprises at least one selected from:
a matching result (312) for the question data (110, 320) and the video data (121, 122, 310);
a matching result (332) for the question data (110, 320) and the candidate answer data (131, 132, 133, 330); or
a video segment (1211) for the question data (110, 320) in the video data (121, 122, 310).

9. The method according to any one of claims 1 to 8, wherein the link relationship (340) comprises graph data; and the determining a matching result for the video data (121, 122, 310), the question data (110, 320) and the candidate answer data (131, 132, 133, 330) based on the link relationship (340) comprises:
reasoning using the graph data to obtain the matching result for the video data (121, 122, 310), the question data (110, 320) and the candidate answer data (131, 132, 133, 330).

10. An apparatus of processing data, comprising:
a first acquisition module (510) configured to generate a video feature, a question feature and an answer feature based on acquired video data, acquired question data and acquired candidate answer data;
a determination module (520) configured to determine a link relationship between the video feature, the question feature and the answer feature; and
a second acquisition module (530) configured to determine a matching result for the video data, the question data and the candidate answer data based on the link relationship.

11. The apparatus according to claim 10, wherein the first acquisition module (510) comprises:
a first processing sub-module configured to process the video data based on first knowledge data to obtain the video feature, wherein the first knowledge data is associated with the video data;
a second processing sub-module configured to process the question data based on second knowledge data to obtain the question feature, wherein the second knowledge data is associated with the question data; and
a third processing sub-module configured to process the candidate answer data based on third knowledge data to obtain the answer feature, wherein the third knowledge data is associated with the candidate answer data,
preferably, wherein the first processing sub-module comprises:
a first extraction unit configured to extract a plurality of video segment data from the video data; and
for each video segment data among the plurality of video segment data:
a second extraction unit configured to perform a feature extraction on the video segment data to obtain a first target feature;
a first acquisition unit configured to acquire a first knowledge feature for the video segment data based on the first knowledge data; and
a first determination unit configured to determine the first target feature and the first knowledge feature as the video feature,
preferably, wherein the first acquisition unit comprises:
an acquisition sub-unit configured to acquire subtitle data in the video segment data;
a speech recognition sub-unit configured to perform a speech recognition on the video segment data to obtain speech data;
an image recognition sub-unit configured to perform an image recognition on the video segment data to obtain image data;
a first determination sub-unit configured to determine a text to be processed based on the subtitle data, the speech data and the image data;
a second determination sub-unit configured to determine target first knowledge data matching the text to be processed from the first knowledge data; and
an extraction sub-unit configured to perform a feature extraction on the target first knowledge data to obtain the first knowledge feature,
preferably, wherein the second processing sub-module comprises:
a third extraction unit configured to perform a feature extraction on the question data to obtain a second target feature;
a second acquisition unit configured to acquire a first sub-text feature of each first sub-text among a plurality of first sub-texts in the question data;
a second determination unit configured to determine target second knowledge data matching the question data from the second knowledge data;
a fourth extraction unit configured to perform a feature extraction on the target second knowledge data to obtain a second knowledge feature; and
a third determination unit configured to determine the second target feature, the first sub-text feature and the second knowledge feature as the question feature.

12. The apparatus according to claim 11, wherein the third processing sub-module comprises:
a fifth extraction unit configured to perform a feature extraction on the candidate answer data to obtain a third target feature;
a third acquisition unit configured to acquire a second sub-text feature of each second sub-text among a plurality of second sub-texts in the candidate answer data;
a fourth determination unit configured to determine target third knowledge data matching the candidate answer data from the third knowledge data;
a sixth extraction unit configured to perform a feature extraction on the target third knowledge data to obtain a third knowledge feature; and
a fifth determination unit configured to determine the third target feature, the second sub-text feature and the third knowledge feature as the answer feature,
preferably, wherein the link relationship comprises at least one selected from:
a link relationship between a plurality of first target features corresponding to the plurality of video segment data respectively, the second target feature, and the third target feature;
a link relationship between the first target feature and the first knowledge feature for each of the video segment data;
a link relationship between the second target feature and the second knowledge feature;
a link relationship between the third target feature and the third knowledge feature;
a link relationship between the second target feature and the first sub-text feature; or
a link relationship between the third target feature and the second sub-text feature,
preferably, wherein the matching result comprises at least one selected from:
a matching result for the question data and the video data;
a matching result for the question data and the candidate answer data; or
a video segment for the question data in the video data,
preferably, wherein the link relationship comprises graph data; and the second acquisition module (530) is further configured to:
reason using the graph data to obtain the matching result for the video data, the question data and the candidate answer data.

13. An electronic device (600), comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 9.

14. A non-transitory computer-readable storage medium having computer instructions therein, wherein the computer instructions are configured to cause a computer to implement the method of any one of claims 1 to 9.

15. A computer program product containing a computer program, wherein the computer program, when executed by a processor, causes the processor to implement the method of any one of claims 1 to 9.
